**Europäisches Patentamt**

(19) **European Patent Office**

**Office européen des brevets**

(11) Veröffentlichungsnummer: **0 067 841**
**B1**

(12) **EUROPÄISCHE PATENTSCHRIFT**

(45) Veröffentlichungstag der Patentschrift:
**10.04.85**

(51) Int. Cl.⁴: **F 24 D 11/00, F 01 K 17/02**

(21) Anmeldenummer: **82900248.4**

(22) Anmeldetag: **23.12.81**

(86) Internationale Anmeldenummer:
**PCT/EP 81/00205**

(87) Internationale Veröffentlichungsnummer:
**WO 82/02245 (08.07.82 Gazette 82/17)**

(54) **VERFAHREN ZUR VERSORGUNG VON FERNWÄRMENETZEN MIT WÄRME AUS EINEM WÄRMEKRAFTWERK.**

(30) Priorität: **23.12.80 DE 3048605**
**19.09.81 DE 3137379**

(43) Veröffentlichungstag der Anmeldung:
**29.12.82 Patentblatt 82/52**

(45) Bekanntmachung des Hinweises auf die Patenterteilung:
**10.04.85 Patentblatt 85/15**

(84) Benannte Vertragsstaaten:
**BE FR GB NL**

(56) Entgegenhaltungen:
**DE - A - 2 312 879**
**DE - B - 1 214 701**

**Brennstoff-Wärme-Kraft, Band 29, Nr. 2, Februar 1977, (Berlin, DE), E. Bitterlich "Bildung von Speicherwärme mittels Entnahmedampf in Lastsenken und deren Nutzung in Spitzenbelastungszeiten", Seiten 51-58**

(73) Patentinhaber: **Saarbergwerke Aktiengesellschaft, Postfach 1030, Trierer Strasse 1 D-6600 Saarbrücken (DE)**

(72) Erfinder: **SPLIETHOFF, Heinz, Warken-Eckstein-Strasse 3, D-6605 Friedrichsthal (DE)**

### Beschreibung

Die Erfindung betrifft ein Verfahren zur Versorgung von Fernwärmenetzen mit Wärme, die zumindest teilweise einem Wärmekraftwerk entnommen wird unter Einsatz eines oder mehrerer kraftwerksnaher Wärmespeicher am Anfang einer Fernwärmevor- und -rücklaufleitung zu Fernwärmenetzen, wobei das Speichermedium, vorzugsweise Wasser, auf eine Temperatur unter 100°C aufgewärmt wird.

Die unmittelbare Nutzung der in Wärmekraftwerken anfallenden Kondensationswärme zur Versorgung von Fernwärmenetzen ist, insbesondere über grössere Entfernungen, wegen des niedrigen Temperaturniveaus dieser sogenannten Abwärme von ca. 35°C unwirtschaftlich. Der Transport von Niedrigtemperaturwärme erfordert entsprechend grosse Volumenströme des Wärmeträgers. In der Regel aber liegen potente Verbraucher weit ab vom Standort grosser Kraftwerke.

Durch entsprechende Auslegung und Abstimmung der Kraftwerkskomponenten kann Wärme auf einem für Fernwärmezwecke gewünschten Temperaturniveau ausgekoppelt werden. In Heizkraftwerken beispielsweise wird bei Gegendruckbetrieb mit Verzicht auf einen wesentlichen Anteil der elektrischen Stromerzeugung — ca. 30 bis 40% der Stromerzeugung eines Kondensationskraftwerkes — der Dampf nach der letzten Turbinenstufe bei erhöhtem Druck kondensiert, so dass bei höherem Temperaturniveau die gesamte Kondensatwärme für Wärmenutzung verfügbar ist. Die elektrische Energie ist hier ein Koppelnebenprodukt der Wärme- bzw. Dampferzeugung. Die maximale Leistung wird bei maximaler Wärmeerzeugung bereitgestellt, wie auch ein geringer Wärmebedarf und damit eine geringe Wärmeerzeugung eine geringe elektrische Leistung bedeutet.

In Entnahme-Kondensationskraftwerken, in denen Dampf z.B. direkt aus den Überströmleitungen zwischen den Mitteldruck- und Niederdruck-Turbinengehäusen entnommen und einem Heizwärmetauscher zugeführt wird, kann die Dampfentnahme bei Teillast der elektrischen Stromerzeugung in einem weiten Bereich dem Bedarf angepasst werden. Die Dampfentnahme ist bei sonst gleichen Druckverhältnissen nur begrenzt durch einen Mindest-Dampfstrom, z.B. zur Kühlung der Niederdruck-Stufe, bzw. durch die maximal zulässige Geschwindigkeit des Entnahmedampfstromes sowie durch die Dampfzustandsverhältnisse am Austritt der Mitteldruckturbine.

In der Praxis wird die Dampfentnahme jedoch von der zur gleichen Zeit geforderten elektrischen Leistung begrenzt, da — im Gegensatz zum Gegendruckkraftwerk — beim Entnahme-Kondensationskraftwerk die auskoppelbare Wärme mit Annäherung der elektrischen Leistung an die Nennleistung sinkt.

Eine grundsätzliche Schwierigkeit der direkten Kopplung von elektrischer Stromerzeugung und Wärmeerzeugung für Fernwärmezwecke in Entnahme-Kondensationskraftwerken liegt im unterschiedlichen Zeitverlauf von Wärmebedarf und auskoppelbarer Wärme, die ihrerseits von der elektrischen Leistung abhängt und somit grossen Schwankungen unterworfen ist. Dabei hat die Bereitstellung der geforderten elektrischen Leistung stets Vorrang.

Zur Entkopplung von Elektrizitäts- und Wärmeerzeugung wurde daher schon vorgeschlagen, Wärmespeicher zwischen Kraftwerk und Fernwärmenetz einzuschalten. Bei einem Entnahme-Kondensationskraftwerk beispielsweise können die Wärmespeicher in Schwachlastzeiten der Stromerzeugung aufgeladen und bei erhöhtem Wärmebedarf bzw. in Spitzenlastzeiten der Stromerzeugung, wenn keine Wärme ausgekoppelt werden kann, in das Fernwärmenetz entladen werden. Die Speicherung des Heisswassers kann sowohl in drucklosen als auch in Druckwärmespeichern erfolgen. Solche Wärmespeicher sind beispielsweise aus der DE-B-1 214 701 und aus «Brennstoff-Wärme-Kraft, Bd. 29, Februar 1977, Seiten 51 bis 58» bekannt, wobei die Speicherwärme einmal in ein Fernwärmenetz, aber auch wieder in den Wasserdampfkreislauf des Kraftwerkes zur kurzfristigen Erhöhung der Spitzenlast entladen werden kann.

Druckwärmespeicher zur Speicherung von Heizwasser über 100°C sind sehr teuer und in der für Fernwärmezwecke erforderlichen Grösse praktisch nicht realisierbar. Drucklose Speicher andererseits erlauben nur eine Speichertemperatur unterhalb 100°C. Zum wirtschaftlichen Betreiben eines Fernwärmenetzes, insbesondere bei grösserer Entfernung zwischen dem Wärmekraftwerk und dem Fernwärmenetz, die über eine lange Fernwärme-Transportleitung überbrückt werden muss, ist jedoch eine ausreichend hohe Temperaturspreizung zwischen Vorlauf und Rücklauf wesentlich. Es bleibt weiterhin der Nachteil bestehen, dass die lange Fernwärme-Transportleitung zum Fernwärmenetz für einen maximalen Wärmetransport ausgelegt sein muss, der jedoch nur in relativ kurzen Zeitperioden vom Verbraucher angefordert wird. Wird die lange Fernwärme-Transportleitung nur für die konstante Grundlast des Fernwärmenetzes ausgelegt, muss die Spitzenlast des Wärmebedarfes von zusätzlichen Heizwerken am Ende der langen Fernwärme-Transportleitung und innerhalb des Fernwärmenetzes gedeckt werden.

Aufgabe der vorliegenden Erfindung ist es, ein Verfahren zur Versorgung eines Fernwärmenetzes über eine Fernwärme-Transportleitung aus einem Wärmekraftwerk unter Einsatz eines oder mehrerer kraftwerksnaher Wärmespeicher anzugeben, das es erlaubt, ohne Beeinträchtigung der Stromerzeugung, grosse, auch zur Abdeckung des Spitzenbedarfes über einen gewissen Zeitraum ausreichende Wärmemengen verfügbar zu machen, wobei die Fernwärme-Transportleitung zum Fernwärmenetz stets optimal mit ihrer maximalen oder nahe ihrer maximalen Leistung betrieben werden kann.

Diese Aufgabe wird erfindungsgemäss dadurch gelöst, dass die Aufheizung auf eine konstante Grundtemperatur vorzugsweise im Schwachlast- oder Teillastbereich des Kraftwerkes erfolgt und dass die Temperatur des Speichermediums unmittelbar vor dessen Einleitung in das Fernwärmenetz auf einen Wert > 100°C angehoben wird.

Dazu wird das Speicherwasser vorteilhaft ein zweites Mal durch den Wärmetauscher der Wärmeauskopplung geführt und nacherhitzt.

Beim Entladen der Wärmespeicher wird dem Wärmekraftwerk nur die erforderliche Differenz-Wärmemenge entnommen, die notwendig ist, um die Temperatur des Speichermediums auf die festgelegte Vorlauftemperatur des Fernwärmenetzes über 100°C anzuheben.

Das erfindungsgemässe Verfahren lässt sich besonders günstig in Kombination mit Entnahme-Kondensationskraftwerken durchführen. Bei Teillast der elektrischen Energieerzeugung können hier — innerhalb der Leistungsgrenzen des Dampferzeugers und in diesem Bereich auch unabhängig von der elektrischen Leistung — Wärmeleistungen ausgekoppelt werden, die gleich oder grösser als der momentane Wärmebedarf des Fernwärmenetzes sind.

Stehen leistungsfähige und ausreichend grosse Wärmespeicher zur Verfügung, lassen sich Stromerzeugung und Wärmeauskopplung zeitlich soweit voneinander trennen, dass in Spitzenlastzeiten keine oder nur geringe Wärmeströme — soweit eben zur Anhebung der Fernwärmevorlauftemperatur auf über 100°C erforderlich — entnommen werden müssen und in diesem Zeitabschnitt die Wärmeversorgung des Fernwärmenetzes aus den Wärmespeichern erfolgen kann. Somit wird eine grössere Auslastung des Kraftwerkes, insbesondere in Nachtzeiten, erreicht. Leistungsfähigkeit und Ausnutzung der langen Fernwärmeleitungen zum Fernwärmenetz bleiben, da die festgelegte Vorlauftemperatur gewährleistet ist, erhalten.

Zweckmässigerweise werden die Heisswasserspeicher bei einer Grundtemperatur von ca. 95°C betrieben.

Wird der Kraftwerksblock unterhalb seiner Nennleistung betrieben, kann, ohne Beeinträchtigung der Stromerzeugung, Wärme mit Vorlauftemperaturen über 100°C direkt ins Fernwärmenetz ausgekoppelt werden, da die Vorlauftemperatur in diesem Fall durch den drucklosen Wärmespeicher nicht begrenzt wird.

Im direkten Fernwärmebetrieb — ohne Zuschalten der Wärmespeicher wird das «kalte» Rücklaufwasser des Fernwärmenetzes einem Heizkondensator bzw. einem Wärmetauscher zugeführt, der mit Entnahmedampf aus dem Kraftwerk beaufschlagt wird. Dabei wird das Wasser auf die für das Fernwärmenetz festgelegte Vorlauftemperatur, vorzugsweise z.B. 120°C, erhitzt und in das Fernwärmenetz geleitet.

Zum «Aufladen» der Wärmespeicher wird — beispielsweise im Schwach- oder Teillastbetrieb der Stromerzeugung und/oder bei geringer Wärmeanforderung — heisses Vorlaufwasser aus dem Wärmetauscher mit kaltem Rücklaufwasser und/oder kaltem Speisewasser in einer Mischstrecke vermischt und so die Speicherladetemperatur von ca. 95°C gewährleistet.

Beim «Entladen» der Wärmespeicher — in Nennlastperioden der Stromerzeugung und/oder bei erhöhter Wärmeanforderung — wird 95°C heisses Speisewasser vor dem Einleiten in das Fernwärmenetz ein zweites Mal durch den Wärmetauscher der Wärmeauskopplung geleitet und wieder auf die Vorlauftemperatur des Fernwärmenetzes erhitzt. Dem Kraftwerk muss dabei lediglich noch die zur Überbrückung der Temperaturdifferenz zwischen Vorlauftemperatur und Temperatur des heissen Speicherwassers erforderliche Wärmeenergie entnommen werden. Damit ist — zumindest für einen gegebenen Zeitzyklus — die Fernwärmeversorgung, unabhängig von der Stromerzeugung, gewährleistet.

Bei hoher Auslastung der elektrischen Kraftwerksleistung und gleichzeitig geringem Wärmebedarf des Fernwärmenetzes kann es vorteilhaft sein, bei gleichem Fernwärmewasserstrom die Temperaturspreizung zu verringern. Dazu wird der dem Speicher entnommene 95°C heisse Wasserstrom in zwei Teilströme aufgeteilt und nur ein Teilstrom in einem zweiten Durchlauf durch den Wärmetauscher auf höhere Temperaturen nacherwärmt. Beide Teilströme werden vor Einleiten in den Vorlauf der langen Fernwärme-Transportleitung wieder zusammengeführt.

Der Spitzenwärmebedarf des Fernwärmenetzes kann — ohne zusätzliche Auslegereserve der langen Fernwärme-Transportleitung und der Wärmeauskopplung — durch weitere, verbrauchernahe Wärmespeicher am Ende der langen Fernwärme-Transportleitung abgedeckt werden. Verbrauchernahe, auf den Spitzenbedarf und die zu überbrückende Zeitspanne abgestimmte Wärmespeicher gleichen den Spitzenbedarf aus und wandeln ihn in einen Grundlastanteil um. Damit kann die lange Fernwärme-Transportleitung für eine konstante Transportleistung optimal ausgelegt und betrieben werden.

Wird der Spitzenbedarf des Fernwärmenetzes durch Spitzenheizwerke innerhalb des Fernwärmenetzes gedeckt, so wird die Grundlast der Fernwärme-Transportleitung um die Spitzenwärme, die nicht in einen Grundlastanteil umgewandelt wurde, kleiner. Im gleichen Mass können die verbrauchernahen Wärmespeicher kleiner werden bzw. entfallen.

Bei Teillast der elektrischen Energieerzeugung kann, insbesondere bei Entnahme-Kondensations-Kraftwerken, die elektrische Kraftwerksleistung über den zum kraftwerksnahen Wärmespeicher ausgekoppelten Wärmeleistungsanteil mit dem Speicherwasserkreisstrom geregelt werden.

Im folgenden wird das erfindungsgemässe Verfahren anhand einer möglichen, beispielhaften Schaltungsanordnung weiter erläutert.

Es zeigen:

Fig. 1 beispielhaft ein Schema eines Kraftwerksblockes mit einer Wärmeauskopplung und einem kraftwerksnahen Wärmespeicher.

Fig. 2 verschiedene, den einzelnen Betriebsweisen der Wärmeauskopplung und des Fernwärmenetzes entsprechende Schaltungsmöglichkeiten.

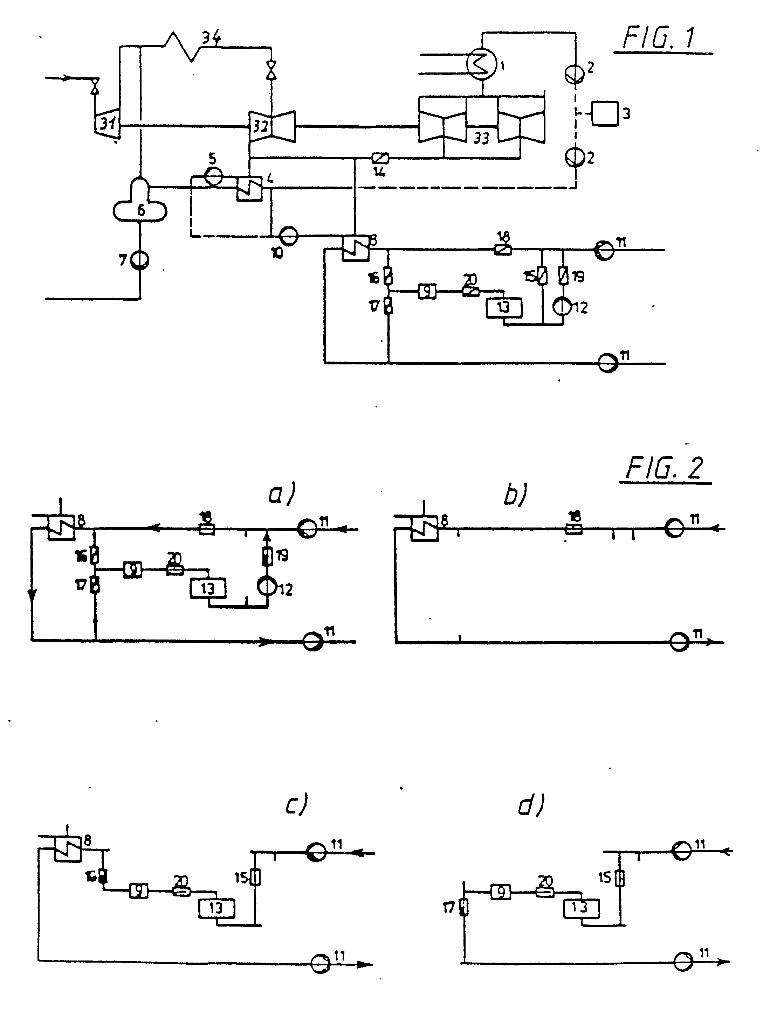

Im in Fig. 1 dargestellten Kraftwerksblock durchströmt der Dampf nacheinander eine Hochdruckturbine 31, einen Zwischenerhitzer 34, eine Mitteldruckturbine 32 sowie eine doppelflutige Niederdruckturbine 33. Das im Kondensator 1 anfallende Kondensat wird über Kondensatpumpen 2 und einen Niederdruckvorwärmer 4 in den Speisewasserbehälter 6 geleitet und gelangt von dort über eine Speisewasserpumpe 7 wieder in den Dampferzeuger. Mit 3 ist ein Kaltkondensatspeicher und mit 5 eine Nebenkondensatpumpe bezeichnet.

Zur Entnahme von Wärme aus dem Entnahme-Kondensationskraftwerk zur Versorgung eines Fernwärmenetzes wird Dampf z.B. vor einer Drosselklappe 14 in den Überströmleitungen zwischen Mitteldruckturbine 32 und Niederdruckturbine 33 oder einer anderen geeigneten, leistungsstarken Turbinenentnahme abgezweigt und dem Primärkreis eines Wärmetauschers 8 zugeleitet. Das anfallende Heizkondensat wird über eine Heizkondensatpumpe 10 und die Kondensatleitung zum Speisewasserbehälter 6 gefördert.

Durch den Sekundärkreis des Wärmetauschers 8 wird Rücklaufwasser des Fernwärmenetzes geleitet und dabei auf eine für das Fernwärmenetz festgelegte Vorlauftemperatur, z.B. auf ca. 120°C, erhitzt.

Zur unmittelbaren Versorgung des Fernwärmenetzes — ohne Zuschalten eines Wärmespeichers 13 — wird dem Wärmetauscher 8 über eine Regelarmatur 18 «kaltes» Rücklaufwasser zugeführt, auf Vorlauftemperatur erhitzt und unmittelbar zum Fernwärmenetz zurückgeführt (Fig. 2b). Der Wärmespeicher 13 ist durch Regel- und Absperrarmaturen 15, 16, 17, 19, 20 vom Wasserkreislauf des Fernwärmenetzes getrennt.

Zum Laden des Wärmespeichers 13 (Fig. 2a) wird über die Regelarmatur 17 heisses Vorlaufwasser entnommen und über die Absperrarmatur 20 dem Wärmespeicher 13 zugeleitet. Über eine Pumpe 12 und die offene Absperrarmatur 19 wird gleichzeitig ein dem Heisswasserstrom zum Wärmespeicher 13 entsprechender kalter Speicherwasserstrom entnommen und dem Rücklauf der Fernwärmeleitung zum Wärmetauscher 8 überlagert. Damit ergibt sich ein Kreisstrom, der dem Fernwärmewasserstrom im Bereich des Wärmetauschers 8 während der Ladezeit des Wärmespeichers 13 überlagert ist und durch die Pumpe 12 gefördert wird. Die zur Pumpe 12 und Absperrarmatur 19 parallel geschaltete Absperrarmatur 15 ist geschlossen.

In Vor- und Rücklauf der Fernwärmeleitung sind Fernwärmepumpen 11 vorgesehen.

Der Wärmespeicher 13 kann als druckloser Heisswasserspeicher ausgeführt werden, wenn dem Fernwärmenetz vor dem Wärmetauscher 8 über die Regelarmatur 16 kaltes Rücklaufwasser und/oder über die Absperrarmatur 19 in den Rücklauf geleitetes kaltes Speicherwasser entnommen und dem in den Wärmespeicher 13 fliessenden heissen Vorlaufwasser zugemischt wird. Zur besseren Durchmischung der beiden Wasserströme ist in den Speicherzulauf eine Mischstrecke 9 eingebaut. Durch eine entsprechende Regelung der beiden Regelarmaturen 16 und 17 ist somit eine konstante Grundtemperatur des Wärmespeichers 13 von ca. 95°C gewährleistet.

Zur Entladung des Wärmespeichers 13 und Wärmeauskopplung aus dem Kraftwerk (Fig. 2c) werden Wärmespeicher 13 und Wärmetauscher 8 in den Fernwärmekreis geschaltet. Die Regel- und Absperrarmaturen 17, 18 und 19 sind geschlossen und die Pumpe 12 ausser Betrieb. Das kalte Rücklaufwasser wird über die Absperrarmatur 15 unmittelbar in den Wärmespeicher 13 geleitet und über die Absperrarmatur 20 und die Regelarmatur 16 eine entsprechende Speicherwassermenge mit der Temperatur von ca. 95°C entnommen, im Wärmetauscher 8 auf die Vorlauftemperatur von z.B. 120°C erwärmt und als heisses Vorlaufwasser in die lange Fernwärme-Vorlaufleitung eingeleitet.

Wird der Wärmetauscher 8 durch Schliessen der Regelarmaturen 16 und der Absperrarmaturen 18 sowie Öffnen der Regelarmatur 17 vom Fernwärmenetz abgetrennt (Fig. 2d), so liefert der Wärmespeicher 13 seine Ladeenergie unmittelbar in das Fernwärmenetz. Die Vorlauftemperatur ist dann allerdings reduziert und entspricht der Temperatur des heissen Speicherwassers von 95°C.

Zur Abdeckung des Wärmespitzenbedarfes können am Ende der langen Fernwärmeleitung bzw. an den Abgängen der langen Fernwärmeleitung zu den einzelnen Fernwärme-Verbrauchernetzen ebenfalls Wärmespeicher vorgesehen werden. Der Anschluss der einzelnen Fernwärmenetze an die lange Fernwärmeleitung erfolgt ähnlich der beschriebenen Schaltung des Wärmespeichers 13. Es entfällt jedoch die Möglichkeit, die Temperatur des Speicherwassers von drucklosen Wärmespeichern vor dessen Einleitung in die einzelnen Fernwärmenetze wieder auf Vorlauftemperatur anzuheben. Dies muss gegebenenfalls durch verbrauchernahe Spitzenheizwerke erfolgen.

## Patentansprüche

1. Verfahren zur Versorgung von Fernwärmenetzen mit Wärme, die zumindest teilweise einem Wärmekraftwerk entnommen wird, unter Einsatz eines oder mehrerer kraftwerksnaher druckloser Wärmespeicher am Anfang einer Fernwärmevor- und -rücklaufleitung zu Fernwärmenetzen, wobei das Speichermedium, vorzugsweise Wasser, auf eine Temperatur unter 100°C aufgewärmt wird, dadurch gekennzeichnet, dass die Aufheizung auf eine konstante Grundtemperatur vorzugsweise im Schwachlast- oder Teillastbereich des Kraftwerkes erfolgt und dass die Temperatur des Speichermediums unmittelbar vor dessen Einleitung in das Fernwärmenetz auf einen Wert > 100°C angehoben wird.

2. Verfahren nach Anspruch 1, dadurch gekennzeichnet, dass die Temperatur des Speichermediums in einem zweiten Durchlauf durch einen Wärmetauscher (8) einer Wärmeauskopplung angehoben wird.

3. Verfahren nach Anspruch 1 oder 2, dadurch gekennzeichnet, dass die Grundtemperatur 95°C beträgt.

4. Verfahren nach einem der Ansprüche 1 bis 3, dadurch gekennzeichnet, dass die Ladetemperatur vor den Wärmetauschern (13) durch Mischen des kalten Speicherkreislaufstromes und/oder des Fernwärmerücklaufes mit dem heissen Kreiswasserstrom nach dem Wärmetauscher (8) in einer Mischstrecke (9) auf eine Temperatur unter 100°C geregelt wird.

5. Verfahren nach einem der Ansprüche 1 bis 4, dadurch gekennzeichnet, dass der aus dem Wärmespeicher (13) entnommene, heisse Speicherwasserstrom in zwei Teilströme aufgeteilt wird, dass die Temperatur des ersten Teilstromes durch einen zweiten Druchlauf durch den Wärmetauscher (8) angehoben wird und dass der erste Teilstrom dem zweiten Teilstrom vor Einleitung in den Vorlauf der langen Fernwärmetransportleitung wieder zugemischt wird.

6. Verfahren nach einem der Ansprüche 1 bis 5, dadurch gekennzeichnet, dass die elektrische Kraftwerksleistung mit dem Speicherwasserstrom zum kraftwerksnahen Wärmespeicher (13) geregelt wird.

## Claims

1. A method for supplying a long-distance heat distribution network with heat which is at least partially obtained from a thermal power station, using one or more unpressurized heat stores, which are close to the power station, at the start of a long-distance heat flow and return pipe to long-distance heat distribution networks, wherein the storage medium, preferably water, is heated to a temperatur below 100°C, characterised in that heating to a constant basic temperature is preferably effected in the low-load or partial-load region of the power station; and that the temperature of the storage medium is raised to a value > 100°C immediately before the introduction of the storage medium into the long-distance heat distribution network.

2. A method as claimed in Claim 1, characterised in that the temperature of the storage medium is increased in a second passage through a heat exchanger (8) of a heat output coupling unit.

3. A method as claimed in Claim 1 or Claim 2, characterised in that the basic temperature is 95°C.

4. A method as claimed in one of Claims 1 to 3, characterised in that the charging temperature before the heat exchangers (13), is controlled at a temperature below 100°C by mixing the cold storage cycle stream and/or the long-distance heat return with the hot cycle water stream after the heat exchanger (8) in a mixing space (9).

5. A method as claimed in one of Claims 1 to 4, characterised in that the hot storage water stream, which is withdrawn from the heat store (13), is divided into two part-streams; that the temperature of the first part stream is increased in a second passage through the heat exchanger (8); and that the first part stream is re-mixed with the second part stream before introduction into the inflow of the long long-distance heat transport pipe.

6. A method as claimed in one of Claims 1 to 5, characterised in that the electrical output of the power station is controlled by means of the storage water flow to the heat store (13) which is close to the power station.

## Revendications

1. Procédé pour alimenter en chaleur des réseaux de chauffage à distance, chaleur qui est prise au moins partiellement dans une centrale thermique, en utilisant un ou plusieurs accumulateurs de chaleur, sans pression proches de la centrale, à l'extrémité initiale d'une conduite d'aller et de retour de chauffage à distance vers les réseaux de chauffage à distance, le fluide accumulateur, de préférence de l'eau, étant chauffé à une température inférieure à 100°C, caractérisé en ce que l'élévation de température à une température de base constante se fait de préférence dans la zone de faible charge ou de charge partielle de la centrale et en ce que la température du fluide accumulateur est directement augmentée à une valeur supérieure à 100°C avant son injection dans le reseau de chauffage a distance.

2. Procédé selon la revendication 1, caractérisé en ce qu'on élève la température du fluide accumulateur au cours d'un second passage dans un échangeur de chaleur (8) d'une dérivation de chaleur.

3. Procédé selon la revendication 1 ou 2, caractérisé en ce que la température de base est égale à 95°C.

4. Procédé selon l'une quelconque des revendications 1 à 3, caractérisé en ce que la température de charge est réglée en amont des échangeurs de chaleur (13) par mélange du courant froid du circuit d'accumulation et/ou du retour du chauffage à distance avec le courant chaud du circuit d'eau après l'échangeur de chaleur (8) dans un chemin de mélange (9) pour être réglée à une température inférieure à 100°C.

5. Procédé selon l'une quelconque des revendications 1 à 4, caractérisé en ce que le courant chaud d'eau d'accumulation pris dans l'accumulateur de chaleur (13) est subdivisé en deux courants partiels, la température du premier courant partiel est augmentée par un second passage à travers l'échangeur de chaleur (8) et le premier courant partiel est mélangé de nouveau au second courant partiel avant injection dans la conduite d'aller de la longue conduite de transport de chaleur à distance.

6. Procédé selon l'une quelconque des revendications 1 à 5, caractérisé en ce que la puissance électrique de la centrale est réglée par le courant d'eau d'accumulation vers l'accumulateur de chaleur (13) proche de la centrale.

0 067 841

FIG. 1

FIG. 2

a)

b)

c)

d)

7